# EUROPEAN PATENT SPECIFICATION

(11) **EP 0 840 188 B1**
(45) Date of publication and mention of the grant of the patent: **28.04.2004**
(21) Application number: 97308652.3
(22) Date of filing: 29.10.1997
(51) Int. Cl.: G05D 7/01

(54) **Constant flow regulated valves**
Ventile mit konstanter Durchflussregelung
Soupapes régulées à débit constant

(30) Priority: 29.10.1996 GB 9622531
(43) Date of publication of application: 06.05.1998
(73) Proprietor: Appliance Brassware Limited, Tividale, West Midlands B69 2HF (GB)
(72) Inventor: Neath, Noel Christopher, Kempsey, Worcester, WR5 3PY (GB)
(74) Representative: Makovski, Priscilla Mary

(56) References cited:
- EP-A- 0 489 296
- WO-A-91/02183
- FR-A- 2 697 888
- US-A- 5 533 549

## Description

This invention is concerned with improvements in or relating to constant flow regulated valves.

A constant flow regulator is a device which serves to maintain a substantially constant flow rate of a fluid (liquid or gas) through a pipe over a range of fluid pressures at an inlet to the device.

There are various circumstances in which it is required that flow can be switched between alternative flow paths which are subject to different constant flow regulation, regulating means in one path having a higher flow rating than the regulating means in the alternative path.

Ball valves are popular valves for interrupting or isolating the flow of gas or liquid through pipe work or apparatus. The method of isolation is generally by rotating the ball through 90°. FR 2 697 888 discloses a ball valve that can prevent or allow flow due to its orientation. The ball of the valve has grooves to reduce the turbulence when fluid flow is permitted.

Variable flow regulation can in some instances be affected by varying the inclination of the bore of the ball in relation to the inlet and outlet ports and restricting the flow from and to the bore of the ball.

A ball valve is disclosed in US 5 533 549 that includes pressure/temperature measuring means comprising two readout ports. By taking readings at the readout ports the flow rate can be determined and then adjusted to the desired rate by rotating a handle that operates the ball valve. However, high pressures can cause the ball to creep through differing positions until fully open.

A combination valve based on a rotatable ball valve is disclosed in WO 91/02183. The valve ball contains a check valve that prevents flow in one direction. Thus, the ball valve has three distinct operating orientations that permit flow in one direction, flow in the other direction and prevention of flow.

It is an object of the present invention to provide means enabling such switching to be effected in a new and improved manner.

The invention provides in one of its aspects a valve suitable for inclusion in a fluid flow line for regulating the flow in the line the valve comprising a valve housing defining an inlet port, an outlet port, and a chamber which interconnects the inlet and outlet ports, a control element which is rotatably mounted within the chamber to regulate flow through the chamber and having a through bore, and operating means whereby the control element can be rotated within the chamber between three orientations, in a first orientation (a closed condition of the valve) fluid is prevented thereby from flowing between the inlet and outlet ports through the chamber, characterised in that in a second orientation (a higher value regulated flow condition) fluid is permitted thereby to flow through the chamber by-passing the control element bore, and in a third orientation (a lower value regulated flow condition) fluid is permitted thereby to flow through the chamber only by way of the control element bore within which a constant flow regulating means is arranged to regulate flow through the chamber.

The control element may be substantially spherical in form, in what is conventionally referred to as a ball valve.

The valve may comprise further constant flow regulating means, for example located within the outlet port, whereby flow through the valve in the higher value flow condition is regulated by said further regulating means. In such cases, the regulating means within the control element bore would be of lower flow rating, whereby to be the dominant regulator in the lower value regulated flow condition.

In a preferred construction, the regulating means within the control element bore is removable from the bore, for the purposes of maintenance or exchange. To that end, a flow regulating device may be housed in a sleeve of a removable cartridge, the sleeve being a sealing fit within the control element bore and the cartridge comprising means enabling it to be gripped for removal from the bore. The valve housing preferably comprises an access port which is arranged axially of the control element bore in the closed condition of the valve, whereby the flow regulating device can be inserted into or withdrawn from the bore through the access port. In normal use of the valve the access port may be suitably sealed, for example by a closure cap or plug.

There now follows a detailed description, to be read with reference to the accompanying drawings, of a flow-regulating ball valve which illustrates the invention by way of example.

In the accompanying drawings:-
**Figure 1** is a view in elevation of the valve, the view being partly in section to show provision of an operating member;
**Figure 2** is a view in plan of the valve; and
**Figure 3** is a view in plan on section III-III of Figure 1 and on a larger scale.

A ball valve comprises a valve housing 10 in the form of a T-piece, presenting a tubular inlet port 12, a tubular outlet port 14 and an access port 16; the access port is aligned perpendicularly to a common axis of the inlet and outlet ports. The housing forms also a ball chamber 18 extending between the inlet and outlet ports, and into which the access port 16 also leads.

A control element in the form of a spherical ball 20 is accommodated within the ball chamber. The ball is arranged in the chamber for rotation about an axis 21 perpendicular both to the common axis of the inlet and outlet ports 12,14 (hereinafter referred to as the flow axis) and to the axis of the access port 16. Operating means, comprising an exposed gripping head 22 positioned externally of the housing, enables the ball to be rotated between three orientations as hereinafter referred to. The operating means is rotatable within an opening in the valve housing, bearing a ring seal 24 to seal the opening and comprising at its inner end a keying bar 26 which engages in a corresponding slot in the ball 20. Circular annular seals 28,30 of the housing 10 are arranged co-axially of the flow axis, adjacent to the inlet and outlet ports 12,14 respectively, to bear against outer surfaces of the ball to seal between those surfaces and the housing.

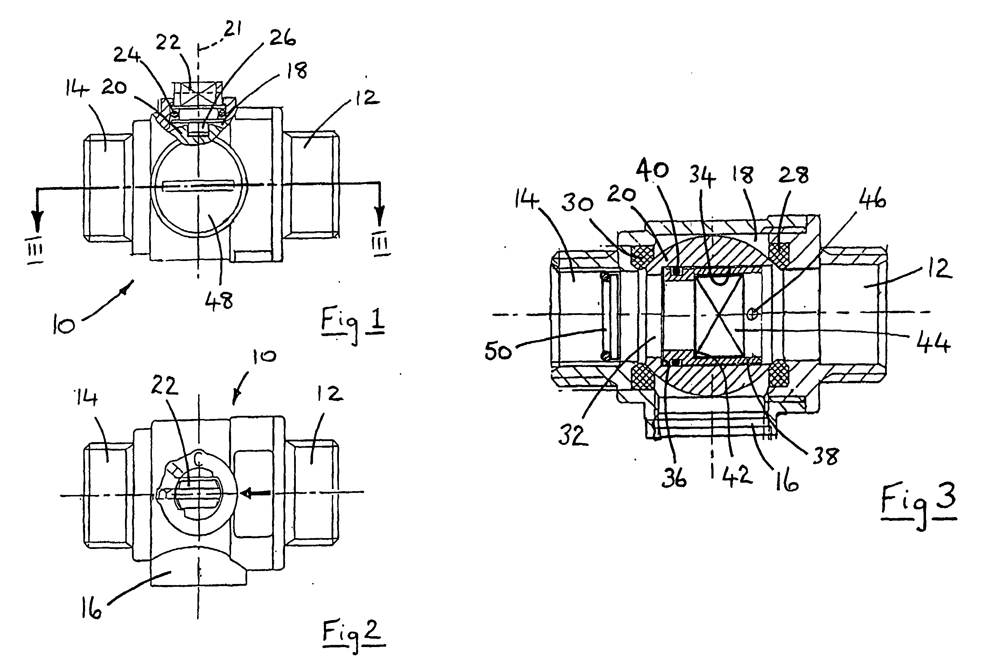

As shown in Figure 3, the ball has a stepped cylindrical bore 32 which is precision machined right through it. An outer portion 32 of the bore (adjacent to the outlet port 14) is of slightly lesser diameter than a major portion 34 of the bore which extends most of the way through the ball from its entry adjacent to the inlet port. A shoulder 36 created at the junction between the two bore portions provides a stop for a cartridge sleeve 38 which is inserted into the major portion 34 of the bore. A groove around the outside of the sleeve accommodates a ring seal 40 which seals in an interference fit between the sleeve and the ball.

The sleeve 38 is itself internally stepped to provide a stop 42 for a constant flow regulator device 44 inserted into the sleeve from the sleeve end (its inlet end) which is adjacent to the inlet port 12 (in the orientation of Figure 3). A gripping bar 46 extends diametrically across the sleeve adjacent to its inlet end.

The access port 16 of the valve housing has a minimum diameter greater than the diameter of the sleeve 38 and the major portion 34 of the ball bore. The port is ordinarily sealed by a closure plug 48 (Figure 1). Upon removal of the closure plug, and with the ball orientated to a closed condition of the valve in which the axis of the ball bore is aligned with the axis of the access port 16 (i.e. at 90° to that shown in Figure 3) the cartridge sleeve 38 can be pulled out from the ball bore through the access port, the gripping bar 46 being employed to gain hold of the sleeve. Removal of the sleeve from the ball bore permits the regulator device 44 to be withdrawn from the sleeve for maintenance work or replacement. The sleeve (or a replacement sleeve) can then be inserted through the access port into the ball bore before re-sealing the access port with the closure plug 48.

A further constant flow regulator device 50 is installed within the outlet port 14 of the valve housing. This further regulator is of a higher flow rating than the regulator 44 of the replaceable cartridge within the ball.

As referred to hereinbefore, the ball can be rotated by means of the gripping head 22 of the operating means between three orientations corresponding to three operating conditions of the valve. In a first orientation the valve is closed, the axis of the ball bore being perpendicular to the flow axis and the housing seals 28,30 sealing all around against outer surfaces of the ball. It is in this orientation of the ball that the regulator cartridge can be accessed through the access port 16, flow through the valve being shut off and preventing leakage through the access port.

In a second orientation of the ball its bore axis is at 45° to the flow axis. This is a higher value regulated flow condition of the valve. The housing seals 28,30 are only partially in engagement with outer ball surfaces, part of the seals lying across the ball bore at its entry and exit (respectively). As a consequence, fluid entering the valve housing through the inlet port 12 can by-pass the ball bore 32,34, passing instead around the ball through the ball chamber 18 to the outlet port 14. Such flow is subject to the higher flow rate regulator 50 only.

In the third orientation of the ball (as illustrated in the drawings) the valve is in a lower value regulated flow condition, since all flow must pass through the low flow rate regulator device 44 within the ball bore (as well as, subsequently, the high flow rate regulator 50).

There is, therefore, provided a dual flow rate (constant flow regulated) ball valve, the regulator within the ball being provided as part of an exchangeable cartridge.

## Claims

1. A valve suitable for inclusion in a fluid flow line for regulating the flow in the line with the valve comprising a valve housing (10) defining an inlet port (12), an outlet port (14), and a chamber which interconnects the inlet (12) and outlet (14) ports, a control element (20) which is rotatably mounted within the chamber to regulate flow through the chamber and having a through bore (32), and operating means (22) whereby the control element (20) can be rotated within the chamber between three orientations, in a first orientation (a closed condition of the valve) fluid is prevented thereby from flowing between the inlet (12) and outlet (14) ports through the chamber, **characterised in that** in a second orientation (a higher value regulated flow condition) fluid is permitted thereby to flow through the chamber (18) by-passing the control element bore (32), and in a third orientation (a lower value regulated flow condition) fluid is permitted thereby to flow through the chamber only by way of the control element bore (32) within which a constant flow regulating means (44) is arranged to regulate flow through the chamber.

2. A valve according to claim 1, in which the control element (20) is of substantially spherical form.

3. A valve according to claim 1 or claim 2, which comprises further constant flow regulating means (50) whereby flow through the valve in the higher value flow condition is regulated by said further regulating means (50), the regulating means (44) within the control element bore (32) being of lower flow rating whereby to be the dominant regulator in the lower value regulated flow condition.

4. A valve according to any one of claims 1 to 3, in which the regulating means (44) within the control element bore (32) is removable from the bore.

5. A valve according to claim 4, in which the regulating means comprises a flow regulating device housed in a sleeve (38) of a removable cartridge, the sleeve (38) being a sealing fit within the control element bore (32).

6. A valve according to claim 4 or claim 5, in which the valve housing (10) comprises an access port (16) which is arranged axially of the control element bore (32) in the closed condition of the valve, whereby the regulating means (44) can be inserted into or withdrawn from the bore through the access port (16).

## Patentansprüche

1. Ein Ventil geeignet zur Einfügung in einer Flüssigkeitsströmungsleitung zur Regulierung der Strömung in der Leitung, wobei das Ventil ein Ventilgehäuse (10), welches einen Einlassanschluss (12) definiert, einen Auslassanschluss (14) und eine Kammer, welche den Einlass- (12) und den Auslassanschluss (14) miteinander verbindet, ein Kontrollelement (20), welches drehbar innerhalb der Kammer montiert ist, um Strömung durch die Kammer zu regulieren, und eine Durchgangsbohrung (32) besitzt, und eine Bedienungseinrichtung (22) umfasst, wobei das Kontrollelement (20) innerhalb der Kammer zwischen drei Orientierungen gedreht werden kann, wobei in einer ersten Orientierung (ein geschlossener Zustand des Ventils) Flüssigkeit daran gehindert wird, zwischen dem Einlass- (12) und dem Auslassanschluss (14) durch die Kammer zu fließen,
**dadurch gekennzeichnet, dass** in einer zweiten Orientierung (ein größerer regulierter Strömungszustand) Flüssigkeit durch die Kammer (18) fließen kann, wobei die Kontrollelementbohrung (32) umgangen wird, und in einer dritten Orientierung (ein kleinerer regulierter Strömungszustand) Flüssigkeit durch die Kammer nur durch die Kontrollelementbohrung (32) fließen kann, worin eine die Strömung konstant haltende Regulierungseinrichtung (44) zur Strömungsregulierung durch die Kammer angeordnet ist.

2. Ein Ventil nach Anspruch 1, wobei das Kontrollelement (20) im wesentlichen kugelförmig ist.

3. Ein Ventil nach Anspruch 1 oder 2, welches eine weitere die Strömung konstant haltende Regulierungseinrichtung (50) umfasst, wobei Strömung durch das Ventil bei dem größeren Strömungszustand mittels der weiteren Regulierungseinrichtung (50) reguliert wird, wobei die Regulierungseinrichtung (44) innerhalb der Kontrollelementbohrung (32) für kleinere Strömungsmengen ist, womit es der entscheidende Regler bei dem kleineren regulierten Strömungszustand ist.

4. Ein Ventil nach einem der Ansprüche 1 bis 3, wobei die Regulierungseinrichtung (44) innerhalb der Kontrollelementbohrung (32) aus der Bohrung entfernbar ist.

5. Ein Ventil nach Anspruch 4, wobei die Regulierungseinrichtung ein Strömungsregulierungsgerät in einer Hülse (38) eines entfernbaren Einsatzes beherbergt, wobei die Hülse (38) eine Dichtung ist, die in die Kontrollelementbohrung (32) eingepasst ist.

6. Ein Ventil nach Anspruch 4 oder 5, wobei das Ventilgehäuse (10) einen Zugangsanschluss (16) umfasst, welcher axial neben der Kontrollelementbohrung (32) in der geschlossenen Stellung des Ventils angeordnet ist, wobei die Regulierungseinrichtung (44) durch den Zugangsanschluss (16) in die Bohrung hinein gesteckt oder aus der Bohrung entnommen werden kann.

## Revendications

1. Soupape destinée à être insérée dans une conduite de circulation de fluide pour réguler le débit dans la conduite, la soupape comprenant un réceptacle de soupape (10) qui forme un orifice d'entrée (12), un orifice de sortie (14), et une chambre interconnectant les orifices d'entrée (12) et de sortie (14), un élément de commande (20) qui est monté de manière rotative à l'intérieur de la chambre pour réguler le débit à travers la chambre et qui possède un trou traversant (32), et des dispositifs de commande (22) permettant de faire tourner l'élément de commande (20) à l'intérieur de la chambre pour qu'il prenne trois orientations, une première orientation (à l'état fermé de la soupape) dans laquelle le fluide est empêché de circuler entre les orifices d'entrée (12) et de sortie (14) à travers la chambre, **caractérisée en ce que** dans une deuxième orientation (état où la régulation du débit est à une valeur élevée) le fluide est autorisé à traverser la chambre (18) en contournant le trou de perçage (32) de l'élément de commande, et dans une troisième orientation (état où la régulation du débit est à une valeur faible) le fluide est autorisé à traverser la chambre uniquement par l'intermédiaire du trou de perçage (32) de l'élément de commande à l'intérieur duquel un dispositif de régulation à débit constant (44) est disposé pour réguler le débit du fluide à travers la chambre.

2. Soupape selon la revendication 1, dans laquelle l'élément de commande (20) a une forme sensiblement sphérique.

3. Soupape selon la revendication 1 ou la revendication 2, qui comprend un autre dispositif de régulation à débit constant (50) dans lequel le débit à travers la soupape dans l'état de valeur de débit élevée est régulé par ledit autre dispositif de régulation (50), le dispositif de régulation (44) situé à l'intérieur du trou de perçage (32) de l'élément de commande étant calibré à une valeur de débit faible afin d'être le dispositif de régulation dominant dans l'état où la régulation de débit est à la valeur faible.

4. Soupape selon l'une quelconque des revendications 1 à 3, dans laquelle le dispositif de régulation de débit (44) situé à l'intérieur du trou de perçage (32) peut être retiré du trou de perçage.

5. Soupape selon la revendication 4, dans laquelle le dispositif de régulation comprend un dispositif de régulation de débit logé dans un manchon (38) d'une cartouche amovible, le manchon (38) étant disposé en ayant un ajustement étanche à l'intérieur du trou de perçage (32) de l'élément de commande.

6. Soupape selon la revendication 4 ou la revendication 5, dans laquelle le réceptacle de soupape (10) comprend un orifice d'accès (16) qui est disposé axialement par rapport au trou de perçage (32) de l'élément de commande dans l'état fermé de la soupape, ce qui permet d'insérer ou de retirer le dispositif de régulation (44) du trou de perçage à travers l'orifice d'accès (16).
